# EUROPEAN PATENT SPECIFICATION

(11) **EP 3 588 639 B1**
(45) Date of publication and mention of the grant of the patent: **23.12.2020**
(21) Application number: 18792228.1
(22) Date of filing: 24.04.2018
(51) Int. Cl.: H01M 4/62, H01M 4/14, H01M 10/06

(54) **LEAD ACID BATTERY**
BLEIBATTERIE
BATTERIE AU PLOMB-ACIDE

(30) Priority: 28.04.2017 JP 2017090846
(43) Date of publication of application: 01.01.2020
(73) Proprietor: GS Yuasa International Ltd., Kyoto-shi, Kyoto 601-8520 (JP)
(72) Inventor: BIN AZAHAR, Muhammad Syahid Fitri, Kyoto-shi Kyoto 601-8520 (JP); SASAKI, Eriko, Kyoto-shi Kyoto 601-8520 (JP)
(74) Representative: Isarpatent
(86) International application number: PCT/JP2018/016522
(87) International publication number: WO 2018/199053

(56) References cited:
- WO-A1-2011/090113
- WO-A1-2012/017702
- JP-A- 2003 142 085
- JP-A- 2013 041 848
- JP-A- 2015 128 053
- JP-A- 2016 154 131
- JP-A- 2017 054 629
- US-A1- 2014 120 385
- D.P. BODEN ET AL: "Optimization studies of carbon additives to negative active material for the purpose of extending the life of VRLA batteries in high-rate partial-state-of-charge operation", JOURNAL OF POWER SOURCES, vol. 195, no. 14, 15 July 2010 (2010-07-15), pages 4470-4493, XP055597543, CH ISSN: 0378-7753, DOI: 10.1016/j.jpowsour.2009.12.069

## Description

### TECHNICAL FIELD

The present invention relates to a lead-acid battery.

### BACKGROUND ART

A lead-acid battery is used in various applications in addition to in-vehicle and industrial applications. The lead-acid battery includes a negative electrode plate, a positive electrode plate, and an electrolyte solution. The negative electrode plate includes a current collector and a negative electrode material. The negative electrode material contains a negative active material and a carbon material and the like. Patent Document 1 proposes a negative electrode material containing graphite, carbon fiber, or carbon black. Patent Document 2 describes that the carbon content of a negative electrode material is 0.2 mass% or less, and describes acetylene black as carbon.

### PRIOR ART DOCUMENT

### PATENT DOCUMENT

Patent Document 1: JP-A-2016-152131
Patent Document 2: JP-A-2016-189260

Non-Patent Document 1: D.P. Boden ET AL: "Optimization studies of carbon additives to negative active material for the purpose of extending the life of VRLA batteries in high-rate partial-state-of-charge operation",Journal of Power Sources, vol. 195, no. 14, 15 July 2010 (2010-07-15), pages 4470-4493.

### DISCLOSURE OF THE INVENTION

### PROBLEMS TO BE SOLVED BY THE INVENTION

The lead-acid battery is sometimes used in a poor charged state referred to as a partial state of charge (PSOC). For example, a lead-acid battery is used in a PSOC during charge control and idling stop/start (ISS). Therefore, the lead-acid battery is required to have high life performance (hereinafter also referred to as PSOC life performance) in a cycle test under a PSOC condition. However, sufficient PSOC life performance is not obtained depending on the composition of the negative electrode material.

### MEANS FOR SOLVING THE PROBLEMS

One aspect of the present invention is a lead-acid battery including:
a negative electrode plate;
a positive electrode plate; and
an electrolyte solution,
wherein:
   the negative electrode plate contains a negative electrode material containing a carbon material;
   the carbon material contains a first carbon material having a particle size of 32 µm or more, and a second carbon material having a particle size of less than 32 µm; and
   a ratio of powder resistance R2 of the second carbon material to powder resistance R1 of the first carbon material: R2/R1 is 155 or less; and
   a ratio of specific surface area S2 of the second carbon material to a specific surface area S1 of the first carbon material: S2/S1 is 20 or more and 240 or less.

### ADVANTAGES OF THE INVENTION

PSOC life performance in a lead-acid battery is improved.

### BRIEF DESCRIPTION OF THE DRAWINGS

Fig. 1 is an exploded perspective view with a part cut away, showing an external appearance and internal structure of a lead-acid battery according to an embodiment of the present invention.
Fig. 2 is a graph showing the relationship between regenerative acceptance performance evaluated for each of lead-acid batteries D1, H1 to H5, and J1 to J6 and the density of a negative electrode material.

### MODE FOR CARRYING OUT THE INVENTION

A lead-acid battery according to one aspect of the present invention includes a negative electrode plate, a positive electrode plate, and an electrolyte solution. The negative electrode plate contains a negative electrode material containing a carbon material. The carbon material contains a first carbon material having a particle size of 32 µm or more, and a second carbon material having a particle size of less than 32 µm. A ratio of powder resistance R2 of the second carbon material to powder resistance R1 of the first carbon material: R2/R1 is 155 or less.

In general, carbon black is added to the negative electrode material from the viewpoint of improving conductivity. However, it has been known that the carbon black easily aggregates in the negative electrode material, which is less likely to form a conductive network, so that sufficient PSOC life performance is less likely to be obtained. It has been conventionally considered that, when the density of the negative electrode material is low, the conductive network is particularly less likely to be formed, which makes it difficult to improve PSOC life performance.

Meanwhile, carbon materials having various powder resistances have been known. It has been known that the powder resistance of a powder material varies depending on the shape, size, internal structure, and/or crystallinity of the particle, and the like. In the conventional technical common sense, the powder resistance of the carbon material is not directly related to the resistance of the negative electrode plate, and it is not considered that the powder resistance affects the PSOC life performance.

Meanwhile, according to the above aspect of the present invention, the first and second carbon materials having different particle sizes are used. Here, the first and second carbon materials have a powder resistance ratio R2/R1 in a range of 155 or less. By using such a carbon material for the negative electrode material, high PSOC life performance can be obtained. This is presumably due to the following reasons. First, by controlling the powder resistance ratio R2/R1 within the above range, a conductive network is easily formed in the negative electrode material. The first and second carbon materials having the powder resistance ratio as described above have low reactivity with the electrolyte solution, whereby a side reaction with the electrolyte solution is suppressed, which provides improved charge efficiency. These are considered to provide improved PSOC life performance.

From the viewpoint of further improving an effect of improving the PSOC life performance, the powder resistance ratio R2/R1 is preferably 90 or less. When the powder resistance ratio R2/R1 is within such a range, excellent PSOC life performance can be secured even if the density of the negative electrode material is low.

A ratio of a specific surface area S2 of the second carbon material to a specific surface area S1 of the first carbon material: S2/S1 is 20 or more and 240 or less. In this case, the balance between the powder resistance ratio and the specific surface area ratio is within an appropriate range, whereby a conductive network is easily formed, and an increase in the resistance of the negative electrode plate is suppressed. Therefore, charge-discharge efficiency is improved, which provides higher PSOC life performance. Even when the density of the negative electrode material is high, the negative electrode plate is easily produced, which is industrially advantageous.

The density of the negative electrode material is preferably 2.5 g/cm³ or more and 4.2 g/cm³ or less. Even when the density is within such a range, high PSOC life performance can be secured by using the first and second carbon materials having the powder resistance ratio as described above. The use of the first and second carbon materials can suppress the cracking of the negative electrode material after curing, and is also advantageous in terms of weight reduction.

The density of the negative electrode material is preferably 2.5 g/cm³ or more and 3.8 g/cm³ or less. Such a density easily causes deteriorated PSOC life performance, but by using the first and second carbon materials having the powder resistance ratio as described above, high PSOC life performance can be secured. Even if the density of the negative electrode material is within such a range, regenerative acceptability is deteriorated when only carbon black is used unlike the above-described aspect. Meanwhile, in the above aspect of the present invention, by using the first and second carbon materials having a powder resistance ratio R2/R1 of 155 or less in combination, the conductive network is easily formed in the negative electrode material even in such a density range, which causes the reductive reaction of lead sulfate to easily proceed, whereby the regenerative acceptability can be improved.

Hereinafter, a lead-acid battery according to an embodiment of the present invention will be described for every main component requirement, but the present invention is not limited to the following embodiment.

### (Negative Electrode Plate)

The negative electrode plate can usually be composed of a negative current collector and a negative electrode material. The negative electrode material is obtained by removing the negative current collector from the negative electrode plate.

A member such as a mat or pasting paper may be attached to the negative electrode plate. When the negative electrode plate includes such a member (attached member), the negative electrode material is obtained by removing the negative current collector and the attached member. However, the thickness of the electrode plate includes the thickness of the mat. When the mat is attached to the separator, the thickness of the mat is included in the thickness of the separator.

The negative electrode material contains a negative active material (lead or lead sulfate) that develops a capacity in an oxidation-reduction reaction. The negative active material in a charged state is spongy metal lead, but an unformed negative electrode plate is usually produced using a lead powder. The negative electrode material contains a carbon material. The negative electrode material may further contain an organic anti-shrink agent and the like, and may contain barium sulfate and/or other additives as necessary.

### (Carbon Material)

The carbon material contains a first carbon material having a particle size of 32 µm or more, and a second carbon material having a particle size of less than 32 µm. The first carbon material and the second carbon material are separated and distinguished in a procedure described later.

Examples of each carbon material include carbon black, graphite, hard carbon, and soft carbon. Examples of the carbon black include acetylene black, ketjen black, furnace black, and lamp black. The graphite may be a carbon material including a graphite type crystal structure, and may be any of artificial graphite and natural graphite.

In the first carbon material, a carbon material having an intensity ratio I_{D}/I_{G} of 0 or more and 0.9 or less is referred to as graphite. The intensity ratio I_{D}/I_{G} is an intensity ratio of a peak (D band) appearing in a range of 1300 cm⁻¹ or more and 1350 cm⁻¹ or less to a peak (G band) appearing in a range of 1550 cm⁻¹ or more and 1600 cm⁻¹ or less in a Raman spectrum.

The type, specific surface area, and/or aspect ratio and the like of the carbon material used for preparing the negative electrode material may be selected or adjusted such that the ratio of the powder resistance R2 of the second carbon material to the powder resistance R1 of the first carbon material: R2/R1 is 155 or less. In addition to these elements, the particle size of the carbon material to be further used may be adjusted. By selecting or adjusting these elements, the powder resistance of each of the first carbon material and the second carbon material can be adjusted, as a result of which the powder resistance ratio R2/R1 can be adjusted.

As the first carbon material, for example, at least one selected from the group consisting of graphite, hard carbon, and soft carbon is preferable. In particular, the first carbon material preferably contains at least graphite. The second carbon material preferably contains at least carbon black. When these carbon materials are used, the powder resistance ratio R2/R1 is easily adjusted.

A ratio of powder resistance R2 of the second carbon material to powder resistance R1 of the first carbon material (powder resistance ratio: R2/R1) may be 155 or less. The powder resistance ratio is within this range, whereby the PSOC life performance can be improved. From the viewpoint of obtaining higher PSOC life performance, the powder resistance ratio R2/R1 is preferably 90 or less. When the powder resistance ratio R2/R1 is 90 or less, high PSOC life performance can be obtained even if the density of the negative electrode material is low (for example, 3.8 g/cm³ or less). The lower limit of the powder resistance ratio R2/R1 is not particularly limited, and is, for example, 10 or more.

A ratio of a specific surface area S2 of the second carbon material to a specific surface area S1 of the first carbon material: S2/S1 is 20 or more from the viewpoint of further improving the PSOC life performance. When the specific surface area ratio S2/S1 is 20 or more, a reaction area between the negative active material and the carbon material increases, whereby a conductive network in the active material is easily formed. Therefore, even when the density of the negative electrode material is low (for example, 3.8 g/cm³ or less), the regenerative acceptance performance can be improved, and high PSOC life performance can be obtained. The specific surface area ratio S2/S1 is 240 or less. When the specific surface area ratio S2/S1 is 240 or less, the penetration degree of the paste of the negative electrode material when the negative electrode plate is produced is easily adjusted to an appropriate range, whereby the paste can be easily filled. Therefore, the negative electrode plate is easily produced, which is industrially advantageous.

The average aspect ratio of the first carbon material is, for example, 1 or more and 100 or less. The average aspect ratio is preferably 1.5 or more. The average aspect ratio is preferably 35% or less, and more preferably 30% or less. These upper and lower limits can be optionally combined. When the average aspect ratio of the first carbon material is 1.5 or more, a conductive network is easily formed in the negative electrode material, whereby the effect of improving the PSOC life performance is further easily obtained. When the average aspect ratio of the first carbon material is 35 or less or 30 or less, the dispersibility of the first carbon material in the negative electrode material is high.

The total content of the first carbon material and the second carbon material in the negative electrode material is, for example, 0.1 mass% or more and 3.5 mass% or less, preferably 0.3 mass% or more, and more preferably 0.5 mass% or more. The total content is preferably 2.5 mass% or less, and more preferably 2 mass% or less. These upper and lower limits can be optionally combined. When the total content of the first carbon material and the second carbon material is within such a range, a conductive network is easily formed, whereby the effect of improving the PSOC life performance can be further improved.

The content of the first carbon material in the negative electrode material is, for example, 0.05 mass% or more and 3.0 mass% or less. The content is preferably 0.1 mass% or more. The content is preferably 2.5 mass% or less, and more preferably 2.0 mass% or less. These upper and lower limits can be optionally combined. When the content of the first carbon material is 0.05 mass% or more, the effect of improving the PSOC life performance can be further improved. When the content of the first carbon material is 3.0 mass% or less, the adhesion between active material particles is easily secured, whereby the occurrence of cracks in the negative electrode plate is suppressed, which more easily secures high PSOC life performance.

The content of the second carbon material in the negative electrode material is, for example, 0.03 mass% or more and 1.5 mass% or less, preferably 0.05 mass% or more, and more preferably 0.1 mass% or more. The content is preferably 1.0 mass% or less, and more preferably 0.5 mass% or less. These upper and lower limits can be optionally combined.

When the content of the second carbon material is 0.03 mass% or more, the effect of improving the PSOC life performance can be further improved. When the content of the second carbon material is 1.5 mass% or less, the carbon material is easily dispersed in the negative electrode material, whereby high regenerative acceptability is easily secured.

A method for determining or analyzing the physical properties of the carbon material will be described below.

### (A) Analysis of Carbon Material

### (A-1) Separation of Carbon Material

A fully charged lead-acid battery that has been formed is disassembled to take out a negative electrode plate, and sulfuric acid is removed by washing with water, followed by vacuum drying (drying under a pressure lower than atmospheric pressure). Next, a negative electrode material is collected from the dried negative electrode plate, and pulverized. 30 mL of a nitric acid aqueous solution having a concentration of 60 mass% is added to 5 g of the pulverized sample, followed by heating at 70°C. To this mixture, 10 g of disodium ethylenediaminetetraacetate, 30 mL of aqueous ammonia having a concentration of 28 mass%, and 100 mL of water are further added, followed by continuously heating to dissolve soluble components. The sample thus pretreated is collected by filtration. The collected sample is passed through a sieve having an opening of 500 µm, to remove components having a large size such as a reinforcing material, and the components that have passed through the sieve are collected as a carbon material.

When the collected carbon material is wet-sieved using a sieve having an opening of 32 µm, a carbon material remaining on the sieve without passing through the opening of the sieve is a first carbon material, and a carbon material passing through the opening of the sieve is a second carbon material. That is, the particle size of each carbon material is based on the size of the opening of the sieve. For wet-sieving, JIS Z8815: 1994 can be referred to.

Specifically, the carbon material is placed on a sieve having an opening of 32 µm, and the carbon material is sieved by gently shaking the sieve for 5 minutes while ion-exchange water is sprinkled. The first carbon material remaining on the sieve is collected from the sieve by pouring ion-exchange water, and separated from the ion-exchange water by filtration. The second carbon material that has passed through the sieve is collected by filtration using a membrane filter (opening: 0.1 µm) made of nitrocellulose. The collected first and second carbon materials are each dried at a temperature of 110°C for 2 hours. As the sieve having an opening of 32 µm, a sieve including a sieve mesh having a nominal opening of 32 µm as defined in JIS Z 8801-1: 2006 is used.

The content of each carbon material in the negative electrode material is determined by measuring the mass of each carbon material separated in the above procedure, and calculating the ratio (mass%) of the mass in 5 g of the pulverized sample.

In the present specification, in the case of a flooded-type battery, a fully charged state of the lead-acid battery is a state where constant current charge is performed until reaching 2.5 V/cell at a current of 0.2 CA in a water bath at 25°C, and constant current charge is then performed at 0.2 CA for 2 hours. In the case of a valve regulated battery, a fully charged state is a state where constant current constant voltage charge of 2.23 V/cell is performed at a constant current of 0.2 CA in an air tank at 25°C, and charge is finished when a charge current during the constant voltage charge is 1 mCA or less.

In the present specification, 1 CA is a current value (A) having the same value as the nominal capacity (Ah) of the battery. For example, in the case of a battery having a nominal capacity of 30 Ah, 1 CA is 30 A, and 1 mCA is 30 mA.

### (A-2) Powder Resistance of Carbon Material

The powder resistance R1 of the first carbon material and the powder resistance R2 of the second carbon material are values measured for each of the first carbon material and the second carbon material separated in the procedure (A-1) by a four-point probe method using a low resistivity meter (Loresta-GX MCP-T700, manufactured by Mitsubishi Chemical Analytech Co., Ltd.) with reference to JIS K 7194: 1994 under a pressure of 3.18 MPa in a state where 0.5 g of a sample is placed in a powder resistivity measurement system (MCP-PD51, manufactured by Mitsubishi Chemical Analytech Co., Ltd.).

### (A-3) Specific Surface Area of Carbon Material

The specific surface area S1 of the first carbon material and the specific surface area S2 of the second carbon material are respectively the BET specific surface areas of the first carbon material and the second carbon material. The BET specific surface area is determined by a gas adsorption method using the BET equation using each of the first carbon material and the second carbon material separated in the procedure (A-1). Each carbon material is pretreated by heating in a nitrogen flow at a temperature of 150°C for 1 hour. Using the pretreated carbon material, the BET specific surface area of each carbon material is determined under the following conditions using the following device.
Measuring device: TriStar3000 manufactured by Micromeritics Instrument Corporation
Adsorption gas: Nitrogen gas having a purity of 99.99% or more
Adsorption temperature: Liquid nitrogen boiling point temperature (77 K)
Method for calculating BET specific surface area: with reference to JIS Z 8830: 2013 7.2

### (A-4) Average Aspect Ratio of First Carbon Material

The first carbon material separated in the procedure (A-1) is observed with an optical microscope or an electron microscope. 10 or more optional particles are selected, and a magnified photograph thereof is taken. Next, the photograph of each particle is subjected to image processing to determine a maximum diameter d1 of the particle and a maximum diameter d2 in a direction orthogonal to the maximum diameter d1, and d1 is divided by d2 to determine an aspect ratio of each particle. An average aspect ratio is calculated by averaging the obtained aspect ratios.

### (Organic Anti-Shrink Agent)

The organic anti-shrink agent contained in the negative electrode material is an organic polymer containing a sulfur element. The organic anti-shrink agent generally contains one or more, preferably a plurality of aromatic rings in its molecule, and contains a sulfur element as a sulfur-containing group. In the sulfur-containing group, a sulfonic acid group or a sulfonyl group which is a stable form is preferable. The sulfonic acid group may exist in an acid form, or may exist in a salt form such as a Na salt.

As the organic anti-shrink agent, for example, lignins may be used, or a condensate of an aromatic compound having a sulfur-containing group with formaldehyde may be used. Examples of the lignins include lignin derivatives such as lignins, lignin sulfonic acids, or salts thereof (alkali metal salts such as sodium salts, and the like). The organic anti-shrink agent may be used alone, or two or more organic anti-shrink agents may be used in combination. For example, lignins and a condensate of an aromatic compound having a sulfur-containing group with formaldehyde may be used in combination. As the aromatic compound, bisphenols, biphenyls, and naphthalenes and the like are preferably used.

The content of the organic anti-shrink agent contained in the negative electrode material is, for example, 0.01 mass% or more and 1.0 mass% or less, preferably 0.02 mass% or more, and more preferably 0.05 mass% or more. Meanwhile, the content is more preferably 0.8 mass% or less, and still more preferably 0.5 mass% or less. These lower limit values and upper limit values can be optionally combined. Here, the content of the organic anti-shrink agent contained in the negative electrode material is a content in the negative electrode material collected by a method described later from a fully charged lead-acid battery that has been formed.

Hereinafter, a method for quantifying the organic anti-shrink agent contained in the negative electrode material will be described. Prior to quantitative analysis, the lead-acid battery that has been formed is fully charged, and then disassembled to obtain a negative electrode plate to be analyzed. The obtained negative electrode plate is washed with water and dried to remove an electrolyte solution in the negative electrode plate. Next, the negative electrode material is separated from the negative electrode plate, to obtain an unpulverized initial sample.

The unpulverized initial sample is pulverized, and the pulverized initial sample is immersed in a 1 mol/L NaOH aqueous solution to extract an organic anti-shrink agent. Insoluble components are removed by filtration from the aqueous NaOH solution containing the extracted organic anti-shrink agent. The obtained filtrate (hereinafter also referred to as "filtrate to be analyzed") is desalted, concentrated, and dried to obtain an organic anti-shrink agent powder (hereinafter also referred to as "powder to be analyzed"). The desalting may be performed by placing the filtrate in a dialysis tube and immersing it in distilled water.

Information is obtained from infrared spectrum of the powder to be analyzed, UV-visible absorption spectrum of a solution obtained by dissolving the powder to be analyzed in distilled water and the like, NMR spectrum of a solution obtained by dissolving the powder to be analyzed in a solvent such as heavy water, and pyrolysis GC-MS that can obtain information on individual compounds constituting a substance, and the like, to specify the organic anti-shrink agent.

The UV-visible absorption spectrum of the filtrate to be analyzed is measured. The content of the organic anti-shrink agent in the negative electrode material is quantified using the spectral intensity and a calibration curve prepared in advance. When the structural formula of the organic anti-shrink agent to be analyzed cannot be strictly specified, and the calibration curve of the same organic anti-shrink agent cannot be used, a calibration curve is prepared using an available organic anti-shrink agent showing UV-visible absorption spectrum, infrared spectroscopic spectrum, and NMR spectrum and the like similar to those of the organic anti-shrink agent to be analyzed.

### (Density of Negative Electrode Material)

The density of the negative electrode material is, for example, 2.0 g/cm³ or more, and preferably 2.5 g/cm³ or more. When the density of the negative electrode material is 2.5 g/cm³ or more, the cracking of the negative electrode material can be suppressed in the cured negative electrode plate. The density of the negative electrode material is, for example, 4.5 g/cm³ or less or 4.2 g/cm³ or less, and may be 3.8 g/cm³. These lower limit values and upper limit values can be optionally combined. The density of the negative electrode material is, for example, 2.0 g/cm³ or more and 4.5 g/cm³ or less, 2.0 g/cm³ or more and 4.2 g/cm³ or less, 2.0 g/cm³ or more and 3.8 g/cm³ or less, 2.5 g/cm³ or more and 4.5 g/cm³ or less, 2.5 g/cm³ or more and 4.2 g/cm³ or less, or 2.5 g/cm³ or more and 3.8 g/cm³ or less. The density of the negative electrode material may be measured using an automatic porosimeter (Autopore IV9505) manufactured by Shimadzu Corporation.

In general, as the density of the negative electrode material is smaller, a conductive network is less likely to be formed, so that the PSOC life performance is easily deteriorated. In the above aspect of the present invention, the first and second carbon materials having a powder resistance ratio R2/R1 in a specific range are used in combination, whereby high PSOC life performance can be secured even if the density of the negative electrode material is, for example, 4.2 g/cm³ or less (for example, 2.0 g/cm³ or more and 4.2 g/cm³ or less, or 2.5 g/cm³ or more and 4.2 g/cm³ or less), or 3.8 g/cm³ or less (for example, 2.0 g/cm³ or more and 3.8 g/cm³ or less, or 2.5 g/cm³ or more and 3.8 g/cm³ or less). Unlike the present invention, when only carbon black is used as the carbon material, a conductive network is less likely to be formed if the density of the negative electrode material is low (for example, 3.8 g/cm³ or less), which causes deteriorated regenerative acceptability. Meanwhile, according to the above aspect of the present invention, by using the first and second carbon materials having a powder resistance ratio R2/R1 in a specific range in combination, a conductive network can be widely formed even when the density of the negative electrode material is as low as 3.8 g/cm³ or less (for example, 2.0 g/cm³ or more and 3.8 g/cm³ or less, or 2.5 g/cm³ or more and 3.8 g/cm³ or less). Therefore, the reductive reaction of lead sulfate easily proceeds, whereby the regenerative acceptability can be improved.

The density of the negative electrode material means a value of the bulk density of the fully charged negative electrode material that has been formed, and is measured as follows. The battery that has been formed is fully charged, and then disassembled. The obtained negative electrode plate is washed with water, and dried to remove an electrolyte solution in the negative electrode plate. Next, the negative electrode material is separated from the negative electrode plate, to obtain an unpulverized measurement sample. The sample is placed into a measurement case, and vacuum-exhausted. The measurement case is then filled with mercury in a pressure of 0.5 psia or more and 0.55 psia or less (≈ 3.45 kPa or more and 3.79 kPa or less), to measure the bulk volume of the negative electrode material. The mass of the measurement sample is divided by the bulk volume, to determine the bulk density of the negative electrode material. A volume obtained by subtracting the injection volume of mercury from the volume of the measurement case is defined as the bulk volume.

### (Other)

The negative current collector may be formed by casting lead (Pb) or a lead alloy, or may be formed by processing a sheet obtained by rolling a lead or lead alloy slab. Examples of the processing method include an expanding process and a punching process.

The lead alloy used for the negative current collector may be any of a Pb-Sb-based alloy, a Pb-Ca-based alloy, and a Pb-Ca-Sn-based alloy. The lead or lead alloy may further contain at least one selected from the group consisting of Ba, Ag, Al, Bi, As, Se, and Cu and the like as an additive element.

The negative electrode plate can be formed by filling a negative current collector with a paste containing a negative electrode material (hereinafter also referred to as a negative electrode paste), followed by curing and drying to produce an unformed negative electrode plate, and thereafter forming the unformed negative electrode plate. The negative electrode paste is produced by adding water and sulfuric acid to a lead powder, a carbon material, and as necessary, an organic anti-shrink agent and/or various additives, followed by kneading. The unformed negative electrode plate is preferably cured at a temperature higher than room temperature and a high humidity.

The negative electrode plate can be formed by charging an element including an unformed negative electrode plate in a state where the element is immersed in an electrolyte solution containing sulfuric acid in the container of the lead-acid battery. However, the formation may be performed before the assembly of the lead-acid battery or the element. Sponge-like metal lead is produced by the formation.

### (Positive Electrode Plate)

Examples of the positive electrode plate of the lead-acid battery include pasted type and tubular type positive electrode plates.

The pasted type positive electrode plate includes a positive current collector and a positive electrode material. The positive electrode material is held by the positive current collector. The positive current collector may be formed in the same manner as in the negative current collector, and can be formed by casting lead or a lead alloy or processing a lead or lead alloy sheet.

The tubular type positive electrode plate includes a plurality of porous tubes, a spine inserted into each of the tubes, a current collecting part for connecting the spines, a positive electrode material filled in each of the tubes into which the spine is inserted, and a joint for connecting the plurality of tubes. The spines and the current collecting part that connects the spines are collectively referred to as a positive current collector.

The lead alloy used for the positive current collector is preferably a Pb-Ca-based alloy, a Pb-Sb-based alloy, and a Pb-Ca-Sn-based alloy in terms of corrosion resistance and mechanical strength. The positive current collector may have lead alloy layers having different compositions, and a plurality of alloy layers may be provided.

The positive electrode material contains a positive active material (lead dioxide or lead sulfate) that develops a capacity in an oxidation-reduction reaction. The positive electrode material may contain other additives as necessary.

The unformed pasted type positive electrode plate is obtained by filling a positive current collector with a positive electrode paste, followed by curing and drying in the same manner as in the negative electrode plate. The positive electrode paste is prepared by kneading a lead powder, additives, water, and sulfuric acid.

The tubular type positive electrode plate is formed by filling each of a plurality of tubes into which a spine is inserted with a lead powder or a slurry lead powder, and causing a joint to connect the tubes.

The formed unformed positive electrode plate is formed. The formation produces lead dioxide. The formation of the positive electrode plate may be performed before the assembly of the lead-acid battery or the element.

### (Separator)

Usually, a separator is disposed between the negative electrode plate and the positive electrode plate. A nonwoven fabric and a microporous membrane and the like are used for the separator. The thickness and number of separators interposed between the negative electrode plate and the positive electrode plate may be selected depending on an interelectrode distance.

The nonwoven fabric is a mat in which fibers are entangled without being woven, and is mainly composed of the fibers. For example, 60 mass% or more of the separator is formed of fibers. As the fibers, glass fibers, polymer fibers (polyolefin fibers, acrylic fibers, polyester fibers such as polyethylene terephthalate fibers), and pulp fibers and the like can be used. Among these, glass fibers are preferable. The nonwoven fabric may contain components other than the fibers, such as an acid-resistant inorganic powder and a polymer as a binder, and the like.

Meanwhile, the microporous membrane is a porous sheet mainly composed of components other than the fiber component. For example, the microporous membrane is obtained by extruding a composition containing a pore-forming additive (a polymer powder and/or an oil and the like) into a sheet shape, and thereafter removing the pore-forming additive to form pores. The microporous membrane is preferably composed of a material having acid resistance, and is preferably composed mainly of a polymer component. As the polymer component, polyolefins such as polyethylene and polypropylene are preferable.

For example, the separator may be composed of only a nonwoven fabric, or may be composed of only a microporous membrane. The separator may be a laminate of a nonwoven fabric and a microporous membrane, a product obtained by bonding the same types or different types of materials, or a product obtained by engaging unevenness in the same types or different types of materials, as necessary.

### (Electrolyte Solution)

The electrolyte solution is an aqueous solution containing sulfuric acid, and may be gelled as necessary. The specific gravity at 20°C of the electrolyte solution in a fully charged lead-acid battery after formation is, for example, 1.10 g/cm³ or more and 1.35 g/cm³ or less, and preferably 1.20 g/cm³ or more and 1.35 g/cm³ or less.

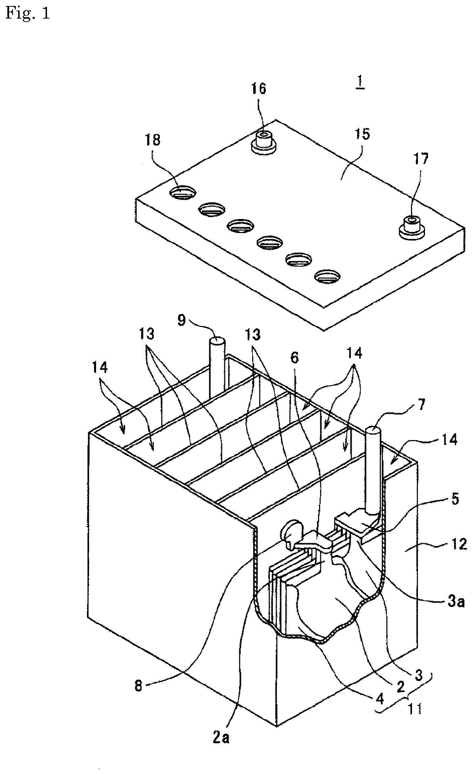

Fig. 1 shows an external appearance of an example of a lead-acid battery according to an embodiment of the present invention.

A lead-acid battery 1 includes a container 12 that accommodates elements 11 and an electrolyte solution (not shown). The container 12 is partitioned into a plurality of cell chambers 14 by a partition 13. One element 11 is accommodated in each cell chamber 14. An opening part of the container 12 is sealed with a lid 15 including a negative electrode terminal 16 and a positive electrode terminal 17. The lid 15 includes a vent plug 18 provided in each cell chamber. At the time of water addition, the vent plug 18 is removed to replenish a water addition solution. The vent plug 18 may have a function for discharging a gas generated in the cell chamber 14 to the outside of the battery.

The element 11 is configured by laminating a plurality of negative electrode plates 2 and a plurality of positive electrode plates 3 with a separator 4 interposed therebetween. Here, the bag-like separator 4 that accommodates the negative electrode plate 2 is shown, but the form of the separator is not particularly limited. In the cell chamber 14 positioned on one end part of the container 12, a negative electrode shelf part 6 that connects lug parts 2a of the plurality of negative electrode plates 2 in parallel is connected to a penetrating connection body 8, and a positive electrode shelf part 5 that connects lug parts 3a of the plurality of positive electrode plates 3 in parallel is connected to a positive pole 7. The positive pole 7 is connected to the positive electrode terminal 17 disposed outside the lid 15. In the cell chamber 14 positioned on the other end part of the container 12, a negative pole 9 is connected to the negative electrode shelf part 6, and the penetrating connection body 8 is connected to the positive electrode shelf part 5. The negative pole 9 is connected to the negative electrode terminal 16 disposed outside the lid 15. Each penetrating connection body 8 passes through a through-hole provided in the partition 13, and connects the elements 11 of the cell chambers 14 adjacent to each other in series.

The lead-acid battery according to one aspect of the present invention will be collectively described below.
(1) One aspect of the present invention is a lead-acid battery including:
   a negative electrode plate;
   a positive electrode plate; and
   an electrolyte solution,
   wherein:
      the negative electrode plate contains a negative electrode material containing a carbon material;
      the carbon material contains a first carbon material having a particle size of 32 µm or more, and a second carbon material having a particle size of less than 32 µm; and
      a ratio of powder resistance R2 of the second carbon material to powder resistance R1 of the first carbon material: R2/R1 is 155 or less.
(2) In the above (1), the ratio: R2/R1 is preferably 90 or less.
(3) In the above (1) or (2), a ratio of a specific surface area S2 of the second carbon material to a specific surface area S1 of the first carbon material: S2/S1 is preferably 20 or more and 240 or less.
(4) In any one of the above (1) to (3), a density of the negative electrode material is preferably 2.5 g/cm³ or more and 4.2 g/cm³ or less.
(5) In any one of the above (1) to (4), a density of the negative electrode material is preferably 2.5 g/cm³ or more and 3.8 g/cm³ or less.
(6) In the above (1) to (5), the ratio: R2/R1 may be 10 or more.
(7) In any one of the above (1) to (6), a content of the first carbon material in the negative electrode material is preferably 0.05 mass% or more.
(8) In any one of the above (1) to (7), a content of the first carbon material in the negative electrode material is preferably 3.0 mass% or less.
(9) In any one of the above (1) to (8), a content of the second carbon material in the negative electrode material is preferably 0.03 mass% or more.
(10) In any one of the above (1) to (9), a content of the second carbon material in the negative electrode material is preferably 0.05 mass% or more.
(11) In any one of the above (1) to (10), a content of the second carbon material in the negative electrode material is preferably 1.5 mass% or less.
(12) In any one of the above (1) to (11), it is preferable that the first carbon material contains at least graphite, and the second carbon material contains at least carbon black.

### EXAMPLES

Hereinafter, the present invention will be specifically described based on Examples and Comparative Examples, but the present invention is not limited to the following Examples.

### <<Lead-Acid Battery A1>>

### (1) Production of Negative Electrode Plate

A lead powder, water, dilute sulfuric acid, a carbon material, and an organic anti-shrink agent are mixed to obtain a negative electrode paste. The negative electrode paste is filled in a net part of an expanded grid made of a Pb-Ca-Sn-based alloy as a negative current collector, cured, and dried to obtain an unformed negative electrode plate.

As the carbon material, carbon black (average particle size D₅₀: 40 nm) and graphite (average particle size D₅₀: 110 µm) are used. An adjusted additive amount of sodium lignin sulfonate as the organic anti-shrink agent is blended with the negative electrode paste such that the content of the sodium lignin sulfonate contained in 100 mass% of a negative electrode material is set to 0.05 mass%. When the negative electrode paste is prepared, the amounts of water and dilute sulfuric acid added to the negative electrode paste are adjusted such that the density of the fully charged negative electrode material that has been formed is set to 4.1 g/cm³.

Note that the density of the negative electrode material is determined by fully charging the battery that has been formed in the procedure described above, disassembling the battery, and using the collected measurement sample. The battery is fully charged according to the procedure described above. The density of the negative electrode material is measured by the method described above using an automatic porosimeter (Autopore IV9505) manufactured by Shimadzu Corporation.

### (2) Production of Positive Electrode Plate

A lead powder, water, and sulfuric acid are kneaded to produce a positive electrode paste. The positive electrode paste is filled in a net part of an expanded grid made of a Pb-Ca-Sn-based alloy, cured, and dried to obtain an unformed positive electrode plate.

### (3) Production of Lead-Acid Battery

The unformed negative electrode plate is accommodated in a bag-like separator formed of a polyethylene microporous membrane, and an element is composed of seven unformed negative electrode plates and six unformed positive electrode plates per cell.

The element is inserted into a container made of polypropylene, and an electrolyte solution is injected into the container. Formation is performed in the container, and a flooded-type lead-acid battery A1 having a nominal voltage of 12 V and a nominal capacity of 30 Ah (5 hour rate) is assembled.

In the present lead-acid battery, the content of a first carbon material contained in the negative electrode material is set to 1.5 mass%, and the content of a second carbon material is set to 0.3 mass%. A powder resistance ratio R2/R1 is set to 15. However, these values are determined as the content of each carbon material contained in the negative electrode material (100 mass%) when the negative electrode plate of the produced lead-acid battery is taken out and the carbon material contained in the negative electrode material is separated into the first carbon material and the second carbon material in the procedure described above. The powder resistances R1 and R2 of the carbon materials and the powder resistance ratio R2/R1 are also determined from the lead-acid battery produced in the procedure described above.

### <<Lead-Acid Batteries A2 to A7>>

The powder resistance ratio R2/R1 is changed as shown in Table 2 by adjusting the specific surface area and/or the average aspect ratio of each carbon material to be used, and further adjusting the average particle size D₅₀ of each carbon material as necessary. Other than this, a negative electrode plate is produced in the same manner as in the lead-acid battery A1, and lead-acid batteries A2 to A7 are assembled in the same manner as in the lead-acid battery A1 except that the obtained negative electrode plate is used.

### <<Lead-Acid Batteries B1 to B7>>

The amounts of water and dilute sulfuric acid added to a negative electrode paste are adjusted such that the density of a negative electrode material that has been formed is set to 3.75 g/cm³. Except for this, a negative electrode plate is produced in the same manner as in the lead-acid battery A1, and a lead-acid battery B1 is assembled in the same manner as in the lead-acid battery A1 except that the obtained negative electrode plate is used.

The powder resistance ratio R2/R1 is changed as shown in Table 2 by adjusting the specific surface area and/or the average aspect ratio of each carbon material to be used, and further adjusting the average particle size D₅₀ of each carbon material as necessary. Other than this, a negative electrode plate is produced in the same manner as in the lead-acid battery B1, and lead-acid batteries B2 to B7 are assembled in the same manner as in the lead-acid battery A1 except that the obtained negative electrode plate is used.

### <<Lead-Acid Batteries C1 to C7>>

The amounts of water and dilute sulfuric acid added to a negative electrode paste are adjusted such that the density of a negative electrode material that has been formed is set to 2.5 g/cm³. Except for this, a negative electrode plate is produced in the same manner as in the lead-acid battery A1, and a lead-acid battery C1 is assembled in the same manner as in the lead-acid battery A1 except that the obtained negative electrode plate is used.

The powder resistance ratio R2/R1 is changed as shown in Table 2 by adjusting the specific surface area and/or the average aspect ratio of each carbon material to be used, and further adjusting the average particle size D₅₀ of each carbon material as necessary. Other than this, a negative electrode plate is produced in the same manner as in the lead-acid battery C1, and lead-acid batteries C2 to C7 are assembled in the same manner as in the lead-acid battery A1 except that the obtained negative electrode plate is used.

### <<Lead-Acid Battery D1>>

A negative electrode plate is formed in the same manner as in the lead-acid battery B1 except that only carbon black (average particle size D₅₀: 40 nm) is used as a carbon material. A lead-acid battery D1 is assembled in the same manner as in the lead-acid battery A1 except that the obtained negative electrode plate is used.

### [Evaluation 1: PSOC Life Performance]

The lead-acid battery is charged and discharged in a pattern shown in Table 1. The number of cycles until a terminal voltage reaches 1.2 V per unit cell is taken as an index of PSOC life performance. The PSOC life performance is expressed as a ratio when the result of the lead-acid battery D1 is taken as 100.

**[Table 1]**

| Process | Contents | Test condition | | Temperature (°C) | Remarks |
|---|---|---|---|---|---|
| | | Current, voltage, or number of repetitions | Truncation condition | | |
| 1 | CC discharge | 1CA | 59 seconds | 40 | |
| 2 | CC discharge | 300A | 1 second | | |
| 3 | CV charge | 2.4 V/cell, maximum of 50 A | 10 seconds | | |
| 4 | CC discharge | 1CA | 5 seconds | | |
| 5 | Repetition of processes 3, 4 | 5 times | - | | 135 seconds (1 cycle) thus far |
| 6 | Repetition of processes 1 to 5 | 50 times | - | | |
| 7 | CV charge | 2.4 V/cell, maximum of 50 A | 900 seconds | | About 2 hours (50 cycles) thus far |
| 8 | Repetition of processes 1 to 7 | 72 times | - | | |
| 9 | Pause | 15 hours | - | | 1 week (3600 cycles) thus far |
| 10 | Return to process 1 | - | - | | |

| | | | | | |
|---|---|---|---|---|---|
| *CC discharge: constant current discharge, CV charge: constant voltage charge | | | | | |

Table 2 shows the results of the lead-acid batteries A1 to A7, B1 to B7, C1 to C7, and D1.

**[Table 2]**

| Battery No. | Content of first carbon material (mass %) | Content of second carbon material (mass%) | R2/R1 | Density of negative electrode material (g/cm³) | PSOC life performance |
|---|---|---|---|---|---|
| D1 | 0 | 0.3 | - | 3.75 | 100 |
| A1 | 1.5 | 0.3 | 15 | 4.1 | 144 |
| A2 | | | 32 | | 144 |
| A3 | | | 40 | | 135 |
| A4 | | | 57 | | 151 |
| A5 | | | 83 | | 144 |
| A6 | | | 152 | | 120 |
| A7 | | | 163 | | 104 |
| B1 | 1.5 | 0.3 | 15 | 3.75 | 138 |
| B2 | | | 32 | | 138 |
| B3 | | | 40 | | 130 |
| B4 | | | 57 | | 145 |
| B5 | | | 83 | | 138 |
| B6 | | | 152 | | 114 |
| B7 | | | 163 | | 100 |
| C1 | 1.5 | 0.3 | 15 | 2.5 | 124 |
| C2 | | | 32 | | 124 |
| C3 | | | 40 | | 117 |
| C4 | | | 57 | | 130 |
| C5 | | | 83 | | 124 |
| C6 | | | 152 | | 105 |
| C7 | | | 163 | | 90 |

As shown in Table 2, the batteries A7, B7, and C7 including two types of carbon materials having a powder resistance ratio R2/R1 exceeding 155 for the negative electrode plate have the same level of PSOC lifetime performance as that of the battery D1 using only carbon black, or the difference between the PSOC lifetime performance of each of the batteries A7, B7, and C7 and the PSOC lifetime performance of the battery D1 is slight even if the batteries A7, B7, and C7 have higher PSOC lifetime performance. Meanwhile, in the battery including the first and second carbon materials having a powder resistance ratio R2/R1 of 155 or less for the negative electrode plate, the PSOC life performance can be considerably improved (A1 to A6, B1 to B6, and C1 to C6). When the powder resistance ratio R2/R1 is 90 or less, an effect of improving the PSOC life performance is significantly improved (A1 to A4, B1 to B4, and C1 to C4). In particular, even if the density of the negative electrode material is low, the powder resistance ratio R2/R1 is 155 or less or 90 or less, whereby high PSOC life performance can be obtained (B1 to B6 and C1 to C6). Such an effect of improving the PSOC life performance is presumably due to the following reasons. By controlling the powder resistance ratio R2/R1 within the above range, a conductive network is easily formed in the negative electrode material, and a side reaction between the carbon material and an electrolyte solution is suppressed to provide improved charge efficiency.

### <<Lead-Acid Batteries E1 to E4>>

A specific surface area ratio S2/S1 obtained in the procedure described above is adjusted to values shown in Table 3 by adjusting the specific surface area and/or the average aspect ratio of each carbon material to be used, and further adjusting the average particle size D₅₀ of each carbon material as necessary. Other than this, a negative electrode plate is produced in the same manner as in the lead-acid battery A3, and lead-acid batteries E1 to E4 are assembled in the same manner as in the lead-acid battery A1 except that the obtained negative electrode plate is used.

### <<Lead-Acid Batteries F1 to F4>>

A specific surface area ratio S2/S1 obtained in the procedure described above is adjusted to values shown in Table 3 by adjusting the specific surface area and/or the average aspect ratio of each carbon material to be used, and further adjusting the average particle size D₅₀ of each carbon material as necessary. Other than this, a negative electrode plate is produced in the same manner as in the lead-acid battery B3, and lead-acid batteries F1 to F4 are assembled in the same manner as in the lead-acid battery A1 except that the obtained negative electrode plate is used.

### <<Lead-Acid Batteries G1 to G3>>

By adjusting the specific surface area of each carbon material to be used, the specific surface area ratio S2/S1 determined in the procedure described above is adjusted to values shown in Table 3. Other than this, a negative electrode plate is produced in the same manner as in the lead-acid battery C3, and lead-acid batteries G1 to G3 are assembled in the same manner as in the lead-acid battery A1 except that the obtained negative electrode plate is used.

The lead-acid batteries E1 to E4, F1 to F4, and G1 to G3 are evaluated for evaluation 1 in the same manner as in the lead-acid battery A1. The evaluation results are shown in Table 3. Table 3 also shows the results of the lead-acid battery D1.

**[Table 3]**

| Battery No. | Content of first carbon material (mass%) | Content of second carbon material (mass%) | R2/R1 | S2/S1 | Density of negative electrode material (g/cm³) | PSOC life performance |
|---|---|---|---|---|---|---|
| D1 | 0 | 0.3 | - | - | 3.75 | 100 |
| E1 | 1.5 | 0.3 | 103 | 16 | 4.1 | 110 |
| E2 | | | 152 | 20 | | 135 |
| E3 | | | 83 | 112 | | 144 |
| E4 | | | 27 | 237 | | 144 |
| F1 | 1.5 | 0.3 | 103 | 16 | 3.75 | 106 |
| F2 | | | 152 | 20 | | 130 |
| F3 | | | 83 | 112 | | 138 |
| F4 | | | 27 | 237 | | 138 |
| G1 | 1.5 | 0.3 | 152 | 20 | 2.5 | 117 |
| G2 | | | 83 | 112 | | 124 |
| G3 | | | 27 | 237 | | 124 |

As shown in Table 3, when the specific surface area ratio S2/S1 is 20 or more, higher PSOC life performance is obtained (E2 to E4, F2 to F4, and G2 and G3). Even if the density of the negative electrode material is low, the specific surface area ratio S2/S1 is 20 or more, whereby high PSOC life performance can be obtained (F2 to F4 and G2 and G3). This is considered to be because a reaction area between the carbon material and the negative active material increases, whereby a conductive network in the active material is easily formed.

### <<Lead-Acid Batteries H1 to H5>>

The amounts of water and dilute sulfuric acid added to a negative electrode paste are adjusted such that the density of a negative electrode material that has been formed is set to values shown in Table 4. Other than this, a negative electrode plate is produced in the same manner as in the lead-acid battery D1, and lead-acid batteries H1 to H5 are assembled in the same manner as in the lead-acid battery A1 except that the obtained negative electrode plate is used.

### <<Lead-Acid Batteries J1 to J6>>

The amounts of water and dilute sulfuric acid added to a negative electrode paste are adjusted such that the density of a negative electrode material that has been formed is set to values shown in Table 4. The powder resistance ratio R2/R1 is adjusted to 57 by adjusting the specific surface area and/or the average aspect ratio of each carbon material to be used, and further adjusting the average particle size D₅₀ of each carbon material as necessary. Except for these, a negative electrode plate is produced in the same manner as in the lead-acid battery A1, and lead-acid batteries J1 to J6 are assembled in the same manner as in the lead-acid battery A1 except that the obtained negative electrode plate is used.

### [Evaluation 2: Regenerative Acceptance Performance]

A fully charged lead-acid battery is discharged by 10% of a nominal capacity at 0.2 CA at 25°C, and then left at room temperature for 12 hours. Next, the battery is charged at a constant voltage of 2.42 V per unit cell. An amount of electricity for first 10 seconds at this time is determined, and taken as an index for evaluating regenerative acceptance performance. The regenerative acceptance performance is expressed as a ratio when the result of the lead-acid battery D1 is taken as 100.

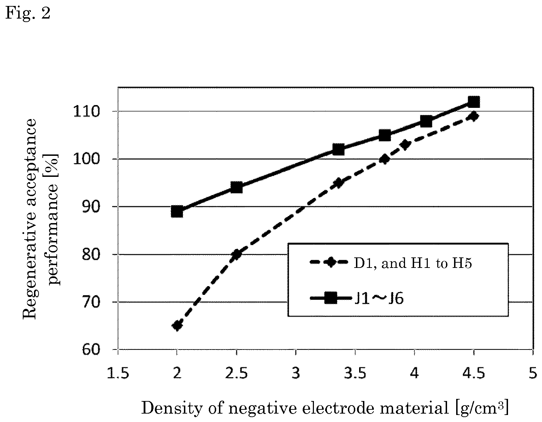

The results of the lead-acid batteries H1 to H5 and J1 to J6 are shown in Table 4 and Fig. 2. Table 4 and Fig. 2 also show the evaluation results of evaluation 2 for the lead-acid battery D1.

**[Table 4]**

| Battery No. | Content of first carbon material (mass %) | Content of second carbon material (mass %) | R2/R1 | Density of negative electrode material (g/cm³) | Regenerative acceptance performance |
|---|---|---|---|---|---|
| H1 | 0 | 0.3 | - | 4.5 | 109 |
| H2 | | | | 3.92 | 103 |
| D1 | | | | 3.75 | 100 |
| H3 | | | | 3.36 | 95 |
| H4 | | | | 2.5 | 80 |
| H5 | | | | 2 | 65 |
| J1 | 1.5 | 0.3 | 57 | 4.5 | 112 |
| J2 | | | | 4.1 | 108 |
| J3 | | | | 3.71 | 105 |
| J4 | | | | 3.36 | 102 |
| J5 | | | | 2.5 | 94 |
| J6 | | | | 2 | 89 |

As shown in Table 4 and Fig. 2, there is provided a relatively small difference between regenerative acceptance performance when the negative electrode plate containing only carbon black as the carbon material is used, and the density of the negative electrode material exceeds 3.8 g/cm³ and regenerative acceptance performance when the first and second carbon materials having an R2/R1 ratio in a specific range are used. In contrast, regenerative acceptance performance when the negative electrode plate containing only carbon black as the carbon material is used, and the density of the negative electrode material is 3.8 g/cm³ or less is easily to be deteriorated as compared to that when the first and second carbon materials having an R2/R1 ratio in a specific range are used. By using the first and second carbon materials having an R2/R1 ratio in a specific range, the regenerative acceptance performance can be improved even when the density of the negative electrode material is 3.8 g/cm³ or less. This is considered to be because, by using the first and second carbon materials having an R2/R1 ratio in a specific range, a conductive network is easily formed in the negative electrode material, which causes the reductive reaction of lead sulfate to easily proceeds.

### INDUSTRIAL APPLICABILITY

The lead-acid battery according to one aspect of the present invention can be applied to valve regulated and flooded-type lead-acid batteries. The lead-acid battery can be suitably utilized as power sources for starting automobiles or motorcycles and the like, and power sources for natural energy storage and industrial energy storage apparatuses and the like of electrical vehicles (forklift and the like) and the like.

### DESCRIPTION OF REFERENCE SIGNS

- 1: lead-acid battery
- 2: negative electrode plate
- 2a: lug part of negative electrode plate
- 3: positive electrode plate
- 4: separator
- 5: positive electrode shelf part
- 6: negative electrode shelf part
- 7: positive pole
- 8: penetrating connection body
- 9: negative pole
- 11: element
- 12: container
- 13: partition
- 14: cell chamber
- 15: lid
- 16: negative electrode terminal
- 17: positive electrode terminal
- 18: vent plug

## Claims

1. A lead-acid battery comprising:
a negative electrode plate;
a positive electrode plate; and
an electrolyte solution,
wherein:
the negative electrode plate contains a negative electrode material containing a carbon material;
the carbon material contains a first carbon material having a particle size of 32 µm or more, and a second carbon material having a particle size of less than 32 µm, wherein said particle size is determined by a wet-sieving according to JIS Z8815: 1994: using a sieve having an opening of 32 µm which includes a sieve mesh having a nominal opening of 32 µm as defined in JIS Z 8801-1: 2006, wherein a carbon material remaining on the sieve without passing through the opening of the sieve is a first carbon material, and a carbon material passing through the opening of the sieve is a second carbon material; and
a ratio of powder resistance R2 of the second carbon material to powder resistance R1 of the first carbon material: R2/R1 is 155 or less, wherein said powder resistance R1 and R2 are measured by a four-point probe method according to JIS K 7194: 1994; and
a ratio of a specific surface area S2 of the second carbon material to a specific surface area S1 of the first carbon material: S2/S1 is 20 or more and 240 or less, wherein said specific surface area S1 and S2 are determined by a gas adsorption method using the BET equation according to JIS Z 8830: 2013 7.2.

2. The lead-acid battery according to claim 1, wherein the ratio: R2/R1 is 90 or less.

3. The lead-acid battery according to claim 1 or 2, wherein a density of the negative electrode material is 2.5 g/cm³ or more and 4.2 g/cm³ or less, wherein the density of the negative electrode material refers to a value of the bulk density of the fully charged negative electrode material that has been formed.

4. The lead-acid battery according to any one of claims 1 to 3, wherein a density of the negative electrode material is 2.5 g/cm³ or more and 3.8 g/cm³ or less, wherein the density of the negative electrode material refers to a value of the bulk density of the fully charged negative electrode material that has been formed.

5. The lead-acid battery according to any one of claims 1 to 4, wherein the ratio: R2/R1 is 10 or more.

6. The lead-acid battery according to any one of claims 1 to 5, wherein a content of the first carbon material in the negative electrode material is 0.05 mass% or more.

7. The lead-acid battery according to any one of claims 1 to 6, wherein a content of the first carbon material in the negative electrode material is 3.0 mass% or less.

8. The lead-acid battery according to any one of claims 1 to 7, wherein a content of the second carbon material in the negative electrode material is 0.03 mass% or more.

9. The lead-acid battery according to any one of claims 1 to 8, wherein a content of the second carbon material in the negative electrode material is 1.5 mass% or less.

10. The lead-acid battery according to any one of claims 1 to 9, wherein a content of the second carbon material in the negative electrode material is 0.05 mass% or more.

11. The lead-acid battery according to any one of claims 1 to 10, wherein the first carbon material contains at least graphite, and the second carbon material contains at least carbon black.

## Patentansprüche

1. Blei-Säure-Batterie, umfassend:
eine negative Elektrodenplatte;
eine positive Elektrodenplatte; und
eine Elektrolytlösung,
wobei:
die negative Elektrodenplatte ein negatives Elektrodenmaterial enthält, das ein Kohlenstoffmaterial enthält;
das Kohlenstoffmaterial ein erstes Kohlenstoffmaterial mit einer Partikelgröße von 32 µm oder mehr und ein zweites Kohlenstoffmaterial mit einer Partikelgröße von weniger als 32 µm enthält, wobei die Teilchengröße durch ein Nass-Sieben gemäß JIS Z8815: 1994: unter Verwendung eines Siebes mit einer Öffnung von 32 µm bestimmt wird, das ein Siebmaschengewebe mit einer nominellen Öffnung von 32 µm, wie in JIS Z 8801-1: 2006 definiert, umfasst, wobei ein Kohlenstoffmaterial, das auf dem Sieb zurückbleibt, ohne durch die Öffnung des Siebes zu treten, ein erstes Kohlenstoffmaterial ist und ein Kohlenstoffmaterial, das durch die Öffnung des Siebes tritt, ein zweites Kohlenstoffmaterial ist; und
ein Verhältnis des Pulverwiderstands R2 des zweiten Kohlenstoffmaterials zum Pulverwiderstand R1 des ersten Kohlenstoffmaterials: R2/R1 155 oder weniger beträgt, wobei der Pulverwiderstand R1 und R2 durch ein Vier-Punkt-Sonden-Verfahren gemäß JIS K 7194: 1994 gemessen werden; und
ein Verhältnis einer spezifischen Oberfläche S2 des zweiten Kohlenstoffmaterials zu einer spezifischen Oberfläche S1 des ersten Kohlenstoffmaterials: S2/S1 20 oder mehr und 240 oder weniger beträgt, wobei die spezifische Oberfläche S1 und S2 durch ein Gasadsorptionsverfahren unter Verwendung der BET-Gleichung gemäß JIS Z 8830: 2013 7.2 bestimmt werden.

2. Blei-Säure-Batterie nach Anspruch 1, wobei das Verhältnis: R2/R1 90 oder weniger beträgt.

3. Blei-Säure-Batterie nach Anspruch 1 oder 2, wobei die Dichte des negativen Elektrodenmaterials 2,5 g/cm³ oder mehr und 4,2 g/cm³ oder weniger beträgt, wobei sich die Dichte des negativen Elektrodenmaterials auf einen Wert der Schüttdichte des vollständig geladenen negativen Elektrodenmaterials bezieht, das sich gebildet hat.

4. Blei-Säure-Batterie nach einem der Ansprüche 1 bis 3, wobei die Dichte des negativen Elektrodenmaterials 2,5 g/cm³ oder mehr und 3,8 g/cm³ oder weniger beträgt, wobei sich die Dichte des negativen Elektrodenmaterials auf einen Wert der Schüttdichte des vollständig geladenen negativen Elektrodenmaterials bezieht, das sich gebildet hat.

5. Blei-Säure-Batterie nach einem der Ansprüche 1 bis 4, wobei das Verhältnis: R2/R1 10 oder mehr beträgt.

6. Blei-Säure-Batterie nach einem der Ansprüche 1 bis 5, wobei der Gehalt des ersten Kohlenstoffmaterials im Material der negativen Elektrode 0,05 Massen-% oder mehr beträgt.

7. Blei-Säure-Batterie nach einem der Ansprüche 1 bis 6, wobei der Gehalt des ersten Kohlenstoffmaterials im negativen Elektrodenmaterial 3,0 Massen-% oder weniger beträgt.

8. Blei-Säure-Batterie nach einem der Ansprüche 1 bis 7, wobei der Gehalt des zweiten Kohlenstoffmaterials im negativen Elektrodenmaterial 0,03 Massen-% oder mehr beträgt.

9. Blei-Säure-Batterie nach einem der Ansprüche 1 bis 8, wobei der Gehalt des zweiten Kohlenstoffmaterials im negativen Elektrodenmaterial 1,5 Massen-% oder weniger beträgt.

10. Blei-Säure-Batterie nach einem der Ansprüche 1 bis 9, wobei der Gehalt des zweiten Kohlenstoffmaterials im negativen Elektrodenmaterial 0,05 Massen-% oder mehr beträgt.

11. Blei-Säure-Batterie nach einem der Ansprüche 1 bis 10, wobei das erste Kohlenstoffmaterial wenigstens Graphit und das zweite Kohlenstoffmaterial wenigstens Ruß enthält.

## Revendications

1. Batterie au plomb-acide comprenant :
une plaque d'électrode négative ;
une plaque d'électrode positive ; et
une solution d'électrolyte,
dans laquelle :
la plaque d'électrode négative contient un matériau d'électrode négative contenant un matériau de carbone ;
le matériau de carbone contient un premier matériau de carbone ayant une taille de particule de 32 µm ou plus et un second matériau de carbone ayant une taille de particule de moins de 32 pm, ladite taille de particule étant déterminée par un tamisage humide selon la norme JIS Z8815: 1994: en utilisant un tamis ayant une ouverture de 32 µm qui comprend une maille de tamis ayant une ouverture nominale de 32 µm telle que définie dans la norme JIS Z 8801-1: 2006, un matériau de carbone restant sur le tamis sans passer à travers l'ouverture du tamis étant un premier matériau de carbone, et un matériau de carbone passant à travers l'ouverture du tamis étant un second matériau de carbone ; et
un rapport de résistance de poudre R2 du second matériau de carbone à la résistance de poudre R1 du premier matériau de carbone : R2/R1 est de 155 ou moins, lesdites résistances de poudre R1 et R2 étant mesurées par un procédé de sonde à quatre points selon la norme JIS K 7194: 1994 ; et
un rapport de surface spécifique S2 du second matériau de carbone à une surface spécifique S1 du premier matériau de carbone : S2/S1 est de 20 ou plus et de 240 ou moins, lesdites surfaces spécifiques S1 et S2 étant déterminées par un procédé d'adsorption de gaz en utilisant l'équation BET selon la norme JIS Z 8830: 2013 7.2.

2. Batterie au plomb-acide selon la revendication 1, dans laquelle le rapport : R2/R1 est de 90 ou moins.

3. Batterie au plomb-acide selon la revendication 1 ou 2, dans laquelle une densité du matériau d'électrode négative est de 2,5 g/cm³ ou plus et de 4,2 g/cm³ ou moins, la densité du matériau d'électrode négative se rapportant à une valeur de la densité en masse du matériau d'électrode négative complètement chargé qui a été formé.

4. Batterie au plomb-acide selon l'une quelconque des revendications 1 à 3, dans laquelle une densité du matériau d'électrode négative est de 2,5 g/cm³ ou plus et de 3,8 g/cm³ ou moins, la densité de l'électrode négative se rapportant à une valeur de la densité en masse du matériau d'électrode négative complètement chargé qui a été formé.

5. Batterie au plomb-acide selon l'une quelconque des revendications 1 à 4, dans laquelle le rapport : R2/R1 est de 10 ou plus.

6. Batterie au plomb-acide selon l'une quelconque des revendications 1 à 5, dans laquelle une teneur du premier matériau de carbone dans le matériau d'électrode négative est de 0,05 % en masse ou plus.

7. Batterie au plomb-acide selon l'une quelconque des revendications 1 à 6, dans laquelle une teneur du premier matériau de carbone dans le matériau d'électrode négative est de 3,0 % en masse ou moins.

8. Batterie au plomb-acide selon l'une quelconque des revendications 1 à 7, dans laquelle une teneur du second matériau de carbone dans le matériau d'électrode négative est de 0,03 % en masse ou plus.

9. Batterie au plomb-acide selon l'une quelconque des revendications 1 à 8, dans laquelle une teneur du second matériau de carbone dans le matériau d'électrode négative est de 1,5 % en masse ou moins.

10. Batterie au plomb-acide selon l'une quelconque des revendications 1 à 9, dans laquelle une teneur du second matériau de carbone dans le matériau d'électrode négative est de 0,05 % en masse ou plus.

11. Batterie au plomb-acide selon l'une quelconque des revendications 1 à 10, dans laquelle le premier matériau de carbone contient au moins du graphite et le second matériau de carbone contient au moins du noir de charbon.
